# EUROPEAN PATENT APPLICATION

(11) **EP 4 811 200 A1**
(43) Date of publication of application: **23.09.2026**
(21) Application number: 26165018.8
(22) Date of filing: 16.03.2026
(51) Int. Cl.: G06F 21/62, G06F 16/2453

(54) **SQL REWRITE LAYER DETECTION FOR DIFFERENTIAL PRIVACY**

(30) Priority: 17.03.2025 US 202519081585
(71) Applicant: Beijing Zitiao Network Technology Co., Ltd., Beijing 100190 (CN)
(72) Inventor: Wu, Xing, Beijing, 100028 (CN); Yan, Qiang, Beijing, 100028 (CN)
(74) Representative: Grünecker Patent- und Rechtsanwälte PartG mbB

(57) **Abstract**

The present disclosure involves methods (200), apparatus, and systems (100, 700) for selection operations to perform a differential privacy (DP) rewrite. This can include: identifying (202) a SQL query; identifying (204) one or more source tables against which the SQL query will be processed and a classification of each source table; generating (206) a parse tree based on the SQL query, the parse tree comprising the one or more source tables, an output table, and at least one operation; searching (210) the parse tree for operations to re-write by: selecting a current branch to search; performing, as an analyzed operation, an analysis of each operation in the current branch starting at the output table and for each operation: determining (212) whether the analyzed operation is an aggregation process that transforms a user-level detailed table (ULDT) into an aggregate table.

## Description

### TECHNICAL FIELD

The present disclosure generally relates to selecting operations in a SQL query for differential privacy rewrite.

### BACKGROUND

Differential privacy (DP) is a framework for releasing statistical information about datasets while protecting the privacy of individual data subjects. DP enables a data holder to share aggregate patterns of a group while limiting information that is leaked about specific individuals. This can be done by injecting calibrated noise into statistical computations, such that the utility of the statistic is preserved while provably limiting what can be inferred about any individual in the dataset.

### SUMMARY

The present disclosure relates to a method, system, and computer-readable storage media for selection operations to perform a differential privacy (DP) rewrite. This can include: identifying a SQL query; identifying one or more source tables against which the SQL query will be processed and a classification of each source table; generating a parse tree based on the SQL query, the parse tree comprising the one or more source tables, an output table, and at least one operation; searching the parse tree for operations to re-write by: selecting a current branch to search; performing, as an analyzed operation, an analysis of each operation in the current branch starting at the output table and for each operation: determining whether the analyzed operation is an aggregation process that transforms a user-level detailed table (ULDT) into an aggregate table; in response to the operation being an aggregation process that transforms a user-level detailed table (ULDT) into an aggregate table: re-writing the operation with a differential privacy (DP) operation; in response to the operation not being an aggregation process that transforms a ULDT into an aggregate table: proceeding to the next operation in the current branch; selecting a next branch as the current branch; and repeating the analysis until each branch of the parse tree has been searched.

Implementations can optionally include one or more of the following features.

In some instances, the classification of each source table indicates whether each source table is a ULDT or an aggregate table.

In some instances, the parse tree comprises at least one intermediate table, wherein an intermediate table is a result of an operation that is not the output table.

In some instances, this includes generating a tag for each table in the parse tree according to a set of tagging rules.

In some instances, the set of tagging rules comprises: for each source table classified as a ULDT, set the tag equal to zero; for each source table classified as an aggregate table, set the tag equal to one; for each intermediate or output table that is a result of a JOIN or UNION operation, set the tag equal to a minimum tag value of input tables used in the JOIN or UNION operation; for each intermediate or output table that is a result of an aggregation operation that does not group by identity fields, set the tag equal to the tag value of an input table incremented by two; and for each intermediate or output table that is not a result of an aggregation operation that does not group by identity fields, set the tag equal to the input tag.

In some instances, determining whether the analyzed operation is an aggregation process that transforms a user-level detailed table (ULDT) into an aggregate table comprises: determining whether the analyzed operation receives an input table with a tag value of zero and produces an output or intermediate table with a tag value of two.

In some instances, generating the parse tree based on the SQL query comprises: sending the SQL query to a query engine with instructions to parse the SQL query and return the parse tree without executing the SQL query.

According to a second aspect, one or more computer-readable storage media is provided. The one or more computer-readable storage media stores one or more instructions that, when executable by one or more computers, cause the one or more computers to perform the method according to the first aspect or one or more implementations of the first aspect.

According to a third aspect, a computer-implemented system is provided. The computer-implemented system includes one or more computers and one or more computer memory devices interoperably coupled with the one or more computers. The one or more computer memory devices have computer-readable storage media storing one or more instructions that, when executed by the one or more computers, perform the method according to the first aspect or one or more implementations of the first aspect.

While generally described as computer-implemented software embodied on tangible media that processes and transforms the respective data, some or all of the aspects can be computer-implemented methods or further included in respective systems or other devices for performing this described functionality. The details of these and other aspects and implementations of the present disclosure are set forth in the accompanying drawings and the description below. Other features, objects, and advantages of the disclosure will be apparent from the description and drawings, and from the claims.

### BRIEF DESCRIPTION OF DRAWINGS

FIG. 1 illustrates a block diagram of an example system for structured query language (SQL) rewrite layer detection.
FIG. 2 is a flowchart illustrating an example process for identifying operations to SQL rewrite.
FIG. 3 is a flowchart illustrating example tagging rules for tables in a SQL rewrite process.
FIG. 4 is an example parse tree to be analyzed.
FIG. 5 is an example parse tree to be analyzed with an intermediate ULDT.
FIG. 6 is an example parse tree to be analyzed with an intermediate aggregate table.
FIG. 7 illustrates a schematic diagram of an example computing system.

Like reference numbers and designations in the various drawings indicate like elements.

### DETAILED DESCRIPTION

This specification relates to methods, apparatuses, and systems for structured query language (SQL) rewrite using users' maximum contribution. Differential privacy (DP) is a technology for the protection of aggregation results to reduce risk of re-identifying user data. One way to implement DP in a query system is to replace original SQLs with DP SQLs. This replacing process can be known as a SQL rewrite. One important step is to change the original aggregation functions to a DP function. For example, replace "sum" with "DP_sum", replace "count" with "DP_count" etc. These DP functions generally have two input parameters. One is the real result, calculated by the original aggregation function. The other is sensitivity.

One challenge is performing a SQL rewrite for a complicated SQL query, which may contain multiple layers of aggregation functions. Different layers may be connected, for example, through a WITH clause or a FROM clause. The DP algorithm should avoid a direct return of real results which can risk privacy leakage. Further, it is undesirable to do a SQL rewrite for every aggregation function because the redundant processing can make the results less accurate. Therefore, rewriting a correct layer of the complex SQL query reduces processing time, and ensures accurate results while maintaining user privacy.

This disclosure introduces a SQL rewrite-layer detection method for user-level DP in a SQL system, which can detect and locate the most suitable rewrite-layer in a complicated SQL query.

It should be noted that tables can be categorized as one of three different types, a source table, intermediate table, and output table. Source tables are tables from which the SQL query scratches data. Intermediate tables are tables that contain temporary outputs (e.g., from a WITH clause or a FROM clause) that are processed further to generate additional intermediate tables or the output table. The output table is the final output of the SQL query.

Each table, whether it be a source, intermediate, or output table can be classified as either a user-level detailed table (ULDT) or an aggregated table. A ULDT is a table that has a field which uniquely distinguishes each user. Fields that uniquely distinguish each user or "user-identifier fields" can be, for example, user_id, device_id, user_address, or others. An aggregate table is a table that does not have user-identifier fields, and is not arranged by any user-identifying field. For example, a table that includes only an average of a non-identifying field from a ULDT table could be considered an aggregated table.

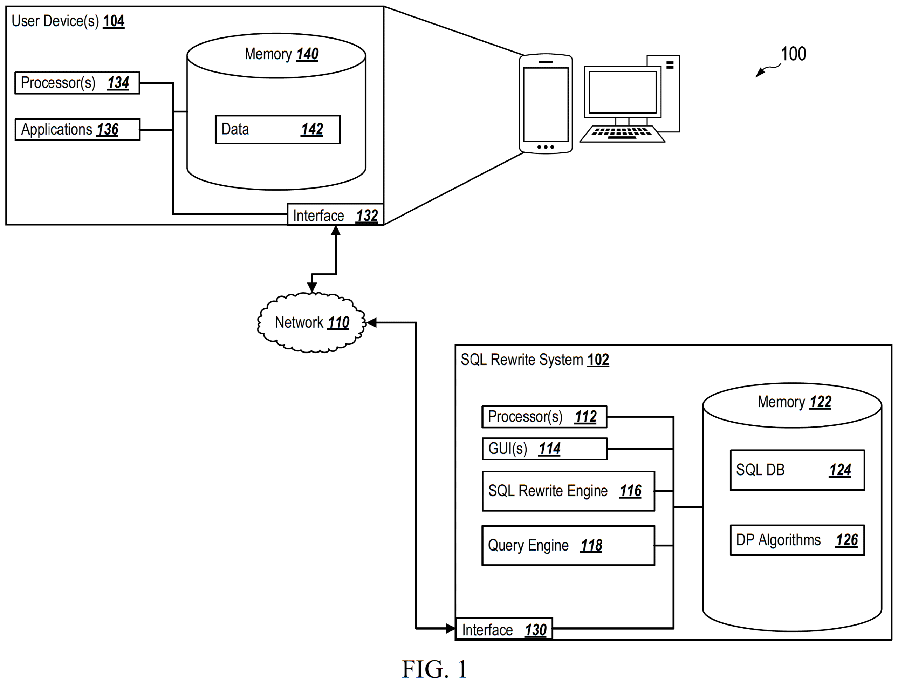

FIG. 1 illustrates a block diagram of an example system 100 for SQL rewrite layer detection. The system 100 includes a SQL rewrite system 102, and one or more user devices 104, which can communicate using a network 110.

Network 110 facilitates wireless or wireline communications between the components of the system 100 (e.g., between the SQL rewrite system 102, and the user devices 104), as well as with any other local or remote computers, such as additional mobile devices, clients, servers, or other devices communicably coupled to network 110, including those not illustrated in FIG. 1. In the illustrated environment, the network 110 is depicted as a single network, but can comprise more than one network without departing from the scope of this disclosure, so long as at least a portion of the network 110 can facilitate communications between senders and recipients. In some instances, one or more of the illustrated components (e.g., the SQL database 124 and the memory 122) can be included within or deployed to network 110 or a portion thereof as one or more cloud-based services or operations. The network 110 can be all or a portion of an enterprise or secured network, while in another instance, at least a portion of the network 110 can represent a connection to the Internet. In some instances, a portion of the network 110 can be a virtual private network (VPN). Further, all or a portion of the network 110 can comprise either a wireline or wireless link. Example wireless links can include 802.11a/b/g/n/ac, 802.20, WiMax, LTE, and/or any other appropriate wireless link. In other words, the network 110 encompasses any internal or external network, networks, sub-network, or combination thereof operable to facilitate communications between various computing components inside and outside the illustrated system 100. The network 110 can communicate, for example, Internet Protocol (IP) packets, Frame Relay frames, Asynchronous Transfer Mode (ATM) cells, voice, video, data, and other suitable information between network addresses. The network 110 can also include one or more local area networks (LANs), radio access networks (RANs), metropolitan area networks (MANs), wide area networks (WANs), all or a portion of the Internet, and/or any other communication system or systems at one or more locations.

The SQL rewrite system 102 can be a server- or web-based system that enables querying and access to one or more databases (e.g., SQL database 124) by one or more user devices 104. However, the SQL rewrite system 102 can introduce noise using DP algorithms to the query responses, ensuring privacy of the data owners (or users) within the SQL database 124. The SQL rewrite system 102 can include one or more processors 112, graphical user interfaces (GUIs) 114, a SQL rewrite engine 116, a query engine 118, and a memory 122 storing a SQL database 124 and one or more DP algorithms 126.

Each of the one or more processors 112 can be a central processing unit (CPU), an application specific integrated circuit (ASIC), a field-programmable gate array (FPGA), or another suitable component. Generally, the processor 112 executes instructions and manipulates data to perform the operations of the SQL rewrite system 102. Specifically, the processor 112 executes the algorithms and operations described in the illustrated figures, as well as the various software modules and functionality, including the functionality for sending communications to and receiving transmissions from the user devices 104, as well as to other devices and systems. Each processor 112 can have a single or multiple cores, with each core available to host and execute an individual processing thread. Further, the number of, types of, and particular processors 112 used to execute the operations described herein can be dynamically determined based on a number of requests, interactions, and operations associated with the SQL rewrite system 102.

Regardless of the particular implementation, "software" includes computer-readable instructions, firmware, wired and/or programmed hardware, or any combination thereof on a tangible medium (transitory or non-transitory, as appropriate) operable when executed to perform at least the processes and operations described herein. In fact, each software component can be fully or partially written or described in any appropriate computer language including C, C++, JavaScript, Java^{™}, Visual Basic, assembler, Perl^{®}, any suitable version of fourth-generation programming language (4GL), as well as others.

GUI 114 of the SQL rewrite system 102 interfaces with at least a portion of the system 100 for any suitable purpose, including generating a visual representation of any particular application or results and/or the content associated with any components of the user devices 104. In particular, the GUI 114 can be used to present results of a query or search, or allow a developer to input queries or prompts to the SQL rewrite system 102, as well as to otherwise interact and present information associated with one or more applications. GUI 114 can also be used to view and interact with various web pages, applications, and web services located local or external to the SQL rewrite system 102. Generally, the GUI 114 provides the user with an efficient and user-friendly presentation of data provided by or communicated within the system. The GUI 114 can include a plurality of customizable frames or views having interactive fields, pull-down lists, and buttons operated by the user. In general, the GUI 114 is often configurable, supports a combination of tables and graphs (e.g., bar, line, pie, and/or status dials), and is able to build real time portals, application windows, and presentations. Therefore, the GUI 114 contemplates any suitable GUI, such as a combination of a generic web browser, a web-enabled application, intelligent engine, and command line interface (CLI) that processes information in the platform and efficiently presents the results to the user visually.

Memory 122 can represent a single memory or multiple memories. The memory 122 can include any memory or database module and can take the form of volatile or non-volatile memory including, without limitation, magnetic media, optical media, random access memory (RAM), read-only memory (ROM), removable media, or any other suitable local or remote memory component. The memory 122 can store various objects or data, including digital asset data, public keys, user and/or account information, administrative settings, password information, caches, applications, backup data, repositories storing business and/or dynamic information, and any other appropriate information associated with the SQL rewrite system 102, including any parameters, variables, algorithms, instructions, rules, constraints, or references thereto. Additionally, the memory 122 can store any other appropriate data, such as SQL database 124, user profiles, algorithms, or processes (e.g., DP algorithms 126), firmware logs and policies, firewall policies, a security or access log, print or other reporting files, as well as others. While illustrated within the system 100, memory 122 or any portion thereof, including some or all of the particular illustrated components, can be located remote from the system 100 in some instances, including as a cloud application or repository or as a separate cloud application or repository when the system 100 itself is a cloud-based system.

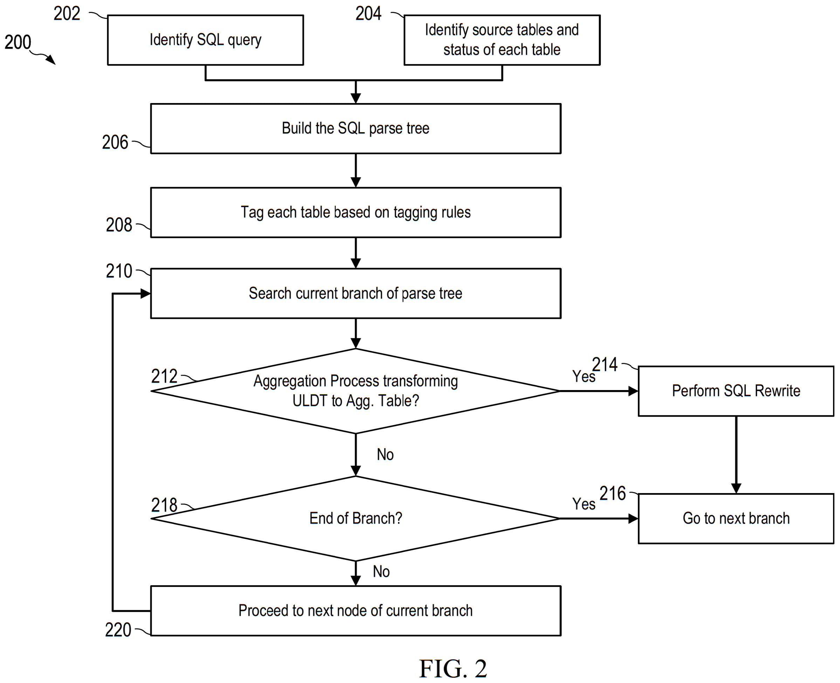

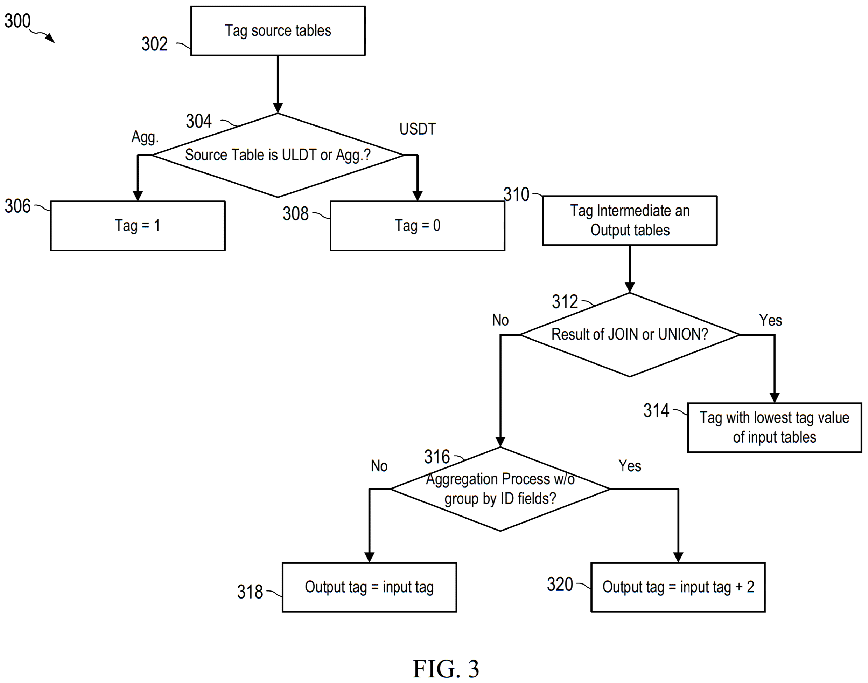

The SQL rewrite engine 116 can be used to ensure privacy of queries outputs. In general, the SQL rewrite engine 116 can receive queries (e.g., from query engine 118) and rewrite the query or portions of the query in a manner that utilizes DP. The details of this SQL rewrite are discussed below with reference to FIGS. 2 and 3. In general, a normal SQL query is received, it can be executed on the SQL database 124 to yield a result, and then the result is processed using a DP algorithm before it is returned. However, in order to provide the correct input parameters to the DP algorithm, ensuring user privacy is maintained, the SQL rewrite engine 116 must determine the allowable sensitivity for the queried data. In some implementations, the SQL rewrite engine 116 accesses a repository of DP algorithms 126 when rewriting SQL. In some instances, these algorithms 126 can be updated periodically, or are selected based on the input query being rewritten.

Query engine 118 can be used by a user device 104, via one or more graphical user interfaces 114. In general, the query engine 118 can take inputs from the user devices 104 and generate SQL formatted queries for information from the SQL database 124. In some implementations, the query engine 118 limits queries to aggregate data. That is, user devices 104 are not permitted to query specific fields or rows of data, and are permitted only to make certain queries (e.g., "mean( )", "sum( )", "count( )", or other general queries).

The SQL database 124 can store data including tables and entries in a SQL format. Additionally, the SQL database 124 can be routinely updated, modified, or queried by a number of user devices 104. In some implementations, SQL database 124 can store sensitive user information, and as such user devices 104 need to perform aggregate queries of the SQL database 124 without being able to reveal private information about any users.

Interface 130 is used by the SQL rewrite system 102 to communicate with other systems in a distributed environment - including within the system 100 - connected to the network 110 (e.g., user devices 104, and other systems communicably coupled to the illustrated SQL rewrite system 102 and/or network 110. Generally, the interface 130 includes logic encoded in software and/or hardware in a suitable combination and operable to communicate with the network 110 and other components. More specifically, the interface 130 can include software supporting one or more communication protocols associated with communications such that the network 110 and/or interface's 130 hardware is operable to communicate physical signals within and outside of the illustrated system 100. Still further, the interface 130 can allow the SQL rewrite system 102 to communicate with the user devices 104, and/or other portions illustrated within the system 100 to perform the operations described herein.

User devices 104 can be computing devices or computers used by one or more users and developers of the software and hardware within system 100. For example, the user devices 104 can interact with the SQL rewrite system 102 to request generation of new aggregates or run a particular query within the SQL database 124. As used in the present disclosure, the term "computer" or "computing devices" is intended to encompass any suitable processing device. For example, the user devices 104 can be any computer or processing device such as, for example, a blade server, general-purpose personal computer (PC), Mac^{®} workstation, UNIX-based workstation, or any other suitable device. In other words, the present disclosure contemplates computers other than general-purpose computers, as well as computers without conventional operating systems. The user devices 104, in some instances, can be desktop systems, a client terminal, or any other suitable device, including a mobile device, such as a smartphone, tablet, smartwatch, or any other mobile computing device. In general, each illustrated component can be adapted to execute any suitable operating system, including Linux, UNIX, Windows, Mac OS^{®}, Java^{™}, Android^{™}, Windows Phone OS, or iOS^{™}, among others. The user devices 104 can include one or more specific applications 136 executing on the user devices 104, or the user devices 104 can include one or more Web browsers or web applications that can interact with particular applications executing remotely from the user devices 104. User devices 104 can include a memory 140, which can be similar to or different from memory 122 and can store device data 142. The user devices 104 can include an interface 132 which enables communication with other components of system 100, and can be similar to interface 130.

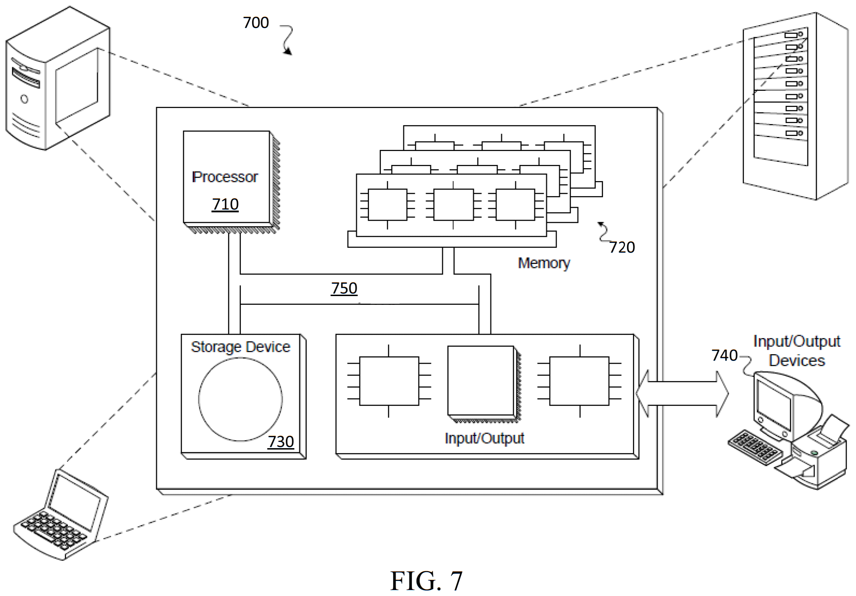

FIG. 2 is a flowchart illustrating an example process 200 for identifying operations to SQL rewrite. The example process 200 can be performed by a system for example, system 100 as described above with respect to FIG. 1. The operations shown in process 200 may not be exhaustive and other operations can be performed as well before, after, or in between any of the illustrated operations. Further, some of the operations may be performed simultaneously, or in a different order than shown in FIG. 2. In some implementations, some of the operations may be performed by a computer, or multiple computers. The one or more computers the process 200 will be described as being performed by a system of, located in one or more locations, and programmed appropriately in accordance with this specification. For example, one or more of a computation system 700 of FIG. 7, appropriately programmed, can perform the process 200.

At 202, a SQL query is identified. This can be a query from a user device (e.g., user device 104 of FIG. 1), and can request certain information from one or more tables in a SQL database. In some implementations, the SQL query is a complex query, requiring multiple sequential operations and, in some instances, multiple source tables to execute.

At 204, the source tables for the SQL query are identified. These tables can each be classified as either a ULDT or an aggregate table. A ULDT includes information sorted or arranged with user identifiable data such as user ID, name, address, personal number, etc. Aggregate tables do not include personal information, and are instead semi-anonymous.

At 206, the SQL parse tree is built. A SQL parse tree is a hierarchical representation of a SQL query, similar to a family tree. It breaks down the query into its constituent parts, such as the SELECT clause, FROM clause, WHERE clause, and JOIN conditions. This tree-like structure helps the query engine or database system understand the query's logic and optimize its execution. The database first parses the SQL statement, analyzing its syntax and building the parse tree. This tree is then used by the query optimizer to determine the most efficient execution plan, including table selection, join order, and index usage, ultimately leading to faster query execution. In some implementations, the query engine is instructed to generate and return the parse tree, without further execution of the query, so the rewrite engine can determine which layers to perform a rewrite in. The parse tree can have multiple operations, tables (e.g., source tables, intermediate tables, and output tables), branches, and nodes.

At 208, each table in the parse tree is tagged according to a set of tagging rules. These tags can be based on the classifications of the initial source tables and the operations that have been performed on them. The tags can be used by the rewrite engine (e.g., SQL rewrite engine 116 of FIG. 1) to identify which operations to rewrite using DP. For example, as aggregation operations are performed, the tag value can be incremented, such that tables tagged above a certain value can be confirmed to not include user-level data. Proposed tagging rules are described below in more detail with respect to FIG. 3. It should be noted that these rules are exemplary only, and other tagging solutions are possible.

At 210, a current branch of the parse tree is searched. The parse tree branches can be searched, for example, from left to right, from longest to shortest, or using other metrics. In general, each branch is searched from top to bottom. That is, from output table to source table. This ensures that SQL rewrite occurs at as high a level as suitable, which minimizes redundant rewriting and wasted processing time as well as prevents unnecessary erosion of the accuracy of the query results.

At 212, during the search of the branch, the rewrite engine determines for each aggregation process whether it is transforming a ULDT to an aggregate table. In some implementations, this is performed by comparing the tag of the input table to the tag of the output table. For example, using the rules outlined below in FIG. 3, if the input tag is equal to zero, and the output tag is equal to two, the aggregation process is transforming a ULDT to an aggregate table.

At 214, if the analyzed process is transforming an ULDT to an aggregate table, the SQL rewrite can occur on this process. The rewrite engine will rewrite that process with a DP version of that process, ensuring differential privacy in the query result. The SQL rewrite involves adding noise or perturbing the data in a controlled way, making it difficult to infer individual records or attributes. This can be achieved through techniques such as adding Laplace noise to numerical values, swapping values within a small range, or using k-anonymity to group similar records together. The rewrite process aims to balance the need for data privacy with the utility of the query results, ensuring that the modified query still provides meaningful insights while minimizing the risk of privacy breaches.

At 216, after the SQL rewrite has been performed, or the entire branch has been searched (as discussed below with respect to 218), the search of that branch ends, and the next branch can be searched. In other words, once a process in a particular branch has been rewritten, no further rewrites are necessary for that branch, and the search of that branch can end.

At 218, if the analyzed process is not transforming a ULDT to an aggregate table, a check is performed to determine whether the branch has been entirely searched. For example, if the last node in the branch is a source table, then no further searching of the branch is necessary and the process 200 can continue to the next branch (216). Alternatively, if there are additional nodes in the current branch process 200 can search them.

At 220, the next node in the current branch is searched, and process 200 can return 210 where the analysis of that node repeats. In some implementations, the entirety of process 200 or a portion thereof (e.g., 210-220) occurs iteratively until the entire parse tree has been searched or had a SQL rewrite performed.

FIG. 3 is a flowchart illustrating an example tagging rules 300 for tables in a SQL rewrite process. The example rules 300 can be performed by a system for example, SQL rewrite system 102 as described above with respect to FIG. 1. The operations shown in process 300 may not be exhaustive and other operations can be performed as well before, after, or in between any of the illustrated operations. Further, some of the operations may be performed simultaneously, or in a different order than shown in FIG. 3. In some implementations, some of the operations may be performed by a computer, or multiple computers. The one or more computers the process 300 will be described as being performed by a system of, located in one or more locations, and programmed appropriately in accordance with this specification. For example, one or more of a computation system 700 of FIG. 7, appropriately programmed, can perform the process 300.

At 302, the source tables are tagged. Each source table can be tagged sequentially or in parallel based on its respective classification.

At 304, the classification for each source table is reviewed to determine whether the table is a ULDT or an aggregate table. If the source table is a ULDT table, its tag is set to zero (308). If the source table is an aggregate table, its tag is set to 1 (306).

At 310, the intermediate tables and output tables are tagged. These can be tagged sequentially or in parallel and are generally tagged based on how they are formed, or what input tables are used to form them.

At 312, if the table being tagged is the result of a JOIN or a UNION, it is tagged with the minimum value of its respective input tables (314). For example, if an intermediate table is the result of a union of 3 source tables, tables A, B, and C, and the tag value of A=2, B=1, and C=0, then the intermediate table will have a tag value of zero. This value corresponds to input table C which had the lowest tag value.

If the table being analyzed is not the result of a UNION or a JOIN, then at 316, it is determined whether it is the result of an aggregation process that does not group by identification fields. Aggregation processes are processes in SQL that generally aggregate data. They include, but are not limited to COUNT, SUM, AVG, MIN, MAX, VAR, MEDIAN, or, GROUP BY. As long as the GROUP BY function does not use a user identifiable field (e.g., user ID, address, username, etc.) then the resulting table will be considered an aggregation process without a group by ID fields. In this case, the output tag is the input tag incremented by 2 (320).

At 318, If the analyzed table is neither the result of a JOIN or UNION, nor the result of an aggregation process without group by ID fields, then the table tag is set as equal to the input tables tag.

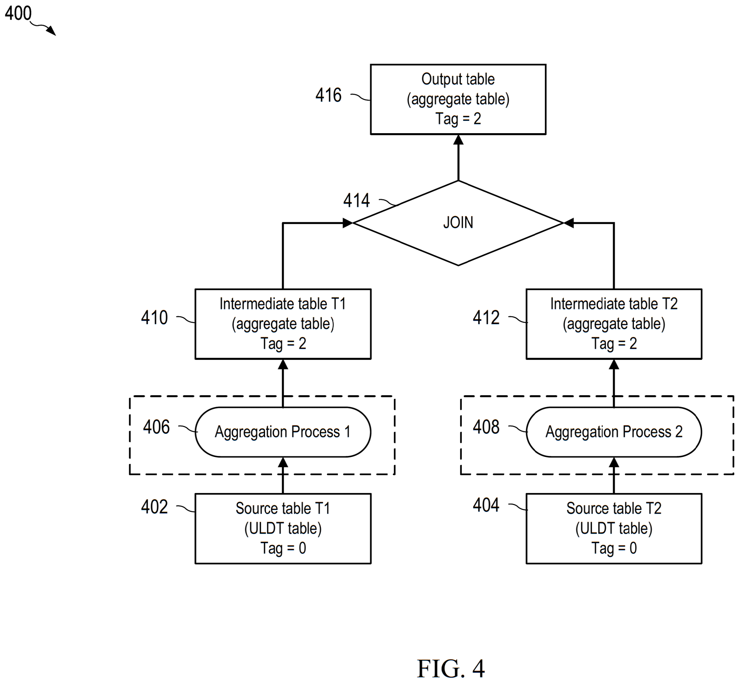

FIG. 4 is an example parse tree to be analyzed. Each branch of the tree will be searched for processes that can be rewritten. Initially the search process (e.g., process 200 as described above with respect to FIG. 2), will search node 416. Note that node 416 has a tag value of two, because it is the result of a JOIN process (414) and the lowest tag value for the tables used in that JOIN process (intermediate table T1 410 and intermediate table T2 412) is 2. Because the process resulting in the output table (JOIN 414) is not an aggregate process that transforms a ULDT into an aggregate table, the search will continue down the left branch.

When aggregation process 1 is searched 406, it will be noted that it does transform a ULDT table into an aggregate table when it takes source table T1 401, and transforms it to intermediate table T2. It should also be noted that aggregation process 1 takes an input table with a tag value of zero and yields a table with a tag value of 2. Therefore aggregation process 1 406 will be rewritten into a DP process. The search of the left branch of tree 400 then concludes, and a new search is performed on the right branch, starting at 416 and proceeding to 408, where similar conditions to 406 exist and aggregation process 402 will be rewritten.

The processes to be rewritten are indicated by the dotted boxes surrounding those processes.

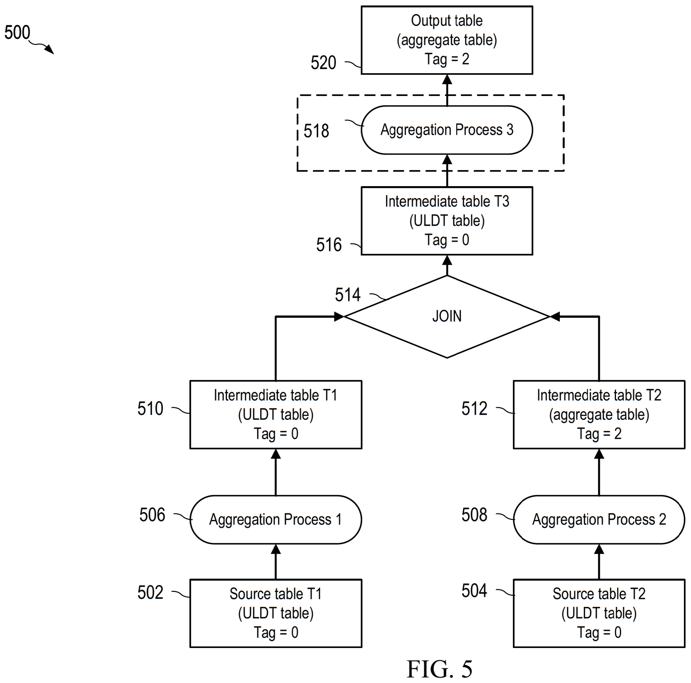

FIG. 5 is an example parse tree to be analyzed. FIG. 5 is similar to FIG. 4, except an additional process above the JOIN (aggregation process 3 518) exists. Additionally, the left branch does not transform the ULDT table into an aggregate table. Since intermediate table T1 510 is a ULDT, the JOIN process 514 does not aggregate its output and intermediate table T3 516 is also a ULDT. The search of both branches will redundantly identify aggregation process 3 518 to be rewritten, and when the search is complete, that process can be rewritten.

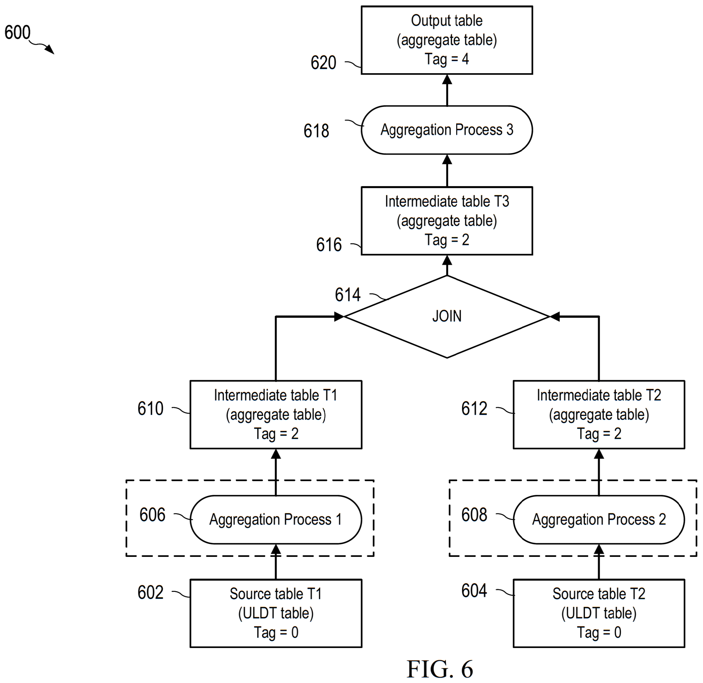

FIG. 6 is an example parse tree to be analyzed. The parse tree 600 is similar to FIG. 5, except the that aggregation process 1 606 does result in transforming a ULDT into an aggregate table (the tag increases from zero to two). Thus the search of the left branch, from 620 down to 602 will collect aggregation process 1 606 to be rewritten. The search of the right branch, from 602 to 604 will collect aggregation process 2 608 to be rewritten. Upon completion of the search, these two processes can be rewritten, resulting in a minimum number of required rewrites to ensure that the output table 620 is a differentially private table.

FIG. 7 illustrates a schematic diagram of an example computing system 700. The system 700 can be used for the operations described in association with the implementations described herein. For example, the system 700 may be included in computing devices of the one or more online components and/or the one or more offline components. The system 700 includes a processor 710, a memory 720, a storage device 730, and an input/output device 740, which are interconnected using a system bus 750. The processor 710 is capable of processing instructions for execution within the system 700. In some implementations, the processor 710 is a single-threaded processor. The processor 710 is a multi-threaded processor. The processor 710 is capable of processing instructions stored in the memory 720 or on the storage device 730 to display graphical information for a user interface on the input/output device 740.

The memory 720 stores information within the system 700. In some implementations, the memory 720 is a computer-readable medium. The memory 720 can be a volatile memory unit or a non-volatile memory unit. The storage device 730 is capable of providing mass storage for the system 700. The storage device 730 is a computer-readable medium. The storage device 730 may be a floppy disk device, a hard disk device, an optical disk device, or a tape device. The input/output device 740 provides input/output operations for the system 700. The input/output device 740 includes a keyboard and/or pointing device. The input/output device 740 includes a display unit for displaying graphical user interfaces.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Implementations of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random-access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, implementations of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser.

Implementations of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship with each other. In some implementations, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of what may be claimed, but rather as descriptions of features that may be specific to particular implementations. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features may be described as acting in certain combinations and even initially claimed as such, one or more features from a claimed combination can, in some cases, be excised from the combination, and the claimed combination may be directed to a sub-combination or variation of a sub-combination.

As used in this disclosure, the terms "a," "an," or "the" are used to include one or more than one unless the context clearly dictates otherwise. The term "or" is used to refer to a nonexclusive "or" unless otherwise indicated. The statement "at least one of A and B" has the same meaning as "A, B, or A and B." In addition, the phraseology or terminology employed in this disclosure, and not otherwise defined, is for the purpose of description only and not of limitation. Any use of section headings is intended to aid reading of the document and is not to be interpreted as limiting; information that is relevant to a section heading may occur within or outside of that particular section.

As used in this disclosure, the term "about" or "approximately" can allow for a degree of variability in a value or range, for example, within 10%, within 5%, or within 1% of a stated value or of a stated limit of a range.

As used in this disclosure, the term "substantially" refers to a majority of, or mostly, as in at least about 50%, 60%, 70%, 80%, 90%, 95%, 96%, 97%, 98%, 99%, 99.5%, 99.9%, 99.99%, or at least about 99.999% or more.

Values expressed in a range format should be interpreted in a flexible manner to include not only the numerical values explicitly recited as the limits of the range, but also the individual numerical values or sub-ranges encompassed within that range as if each numerical value and sub-range is explicitly recited. For example, a range of "0.1% to about 5%" or "0.1% to 5%" should be interpreted to include about 0.1% to about 5%, as well as the individual values (for example, 1%, 2%, 3%, and 4%) and the sub-ranges (for example, 0.1% to 0.5%, 1.1% to 2.2%, 3.3% to 4.4%) within the indicated range. The statement "X to Y" has the same meaning as "about X to about Y," unless indicated otherwise. Likewise, the statement "X, Y, or Z" has the same meaning as "about X, about Y, or about Z," unless indicated otherwise.

Particular implementations of the subject matter have been described. Other implementations, alterations, and permutations of the described implementations are within the scope of the following claims as will be apparent to those skilled in the art. While operations are depicted in the drawings or claims in a particular order, such operations are not required to be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the previously described implementations are not required in all implementations, and the described components and systems can generally be integrated together or packaged into multiple products.

Accordingly, the previously described example implementations do not define or constrain the present disclosure. Other changes, substitutions, and alterations are also possible.

The foregoing description of the specific implementations can be readily modified and/or adapted for various applications. Therefore, such adaptations and modifications are intended to be within the meaning and range of equivalents of the disclosed implementations, based on the teaching and guidance presented herein.

The breadth and scope of the present disclosure should not be limited by any of the above-described example implementations but should be defined only in accordance with the following claims and their equivalents. Accordingly, other implementations also are within the scope of the claims.

## Claims

1. A computer-implemented method (200), comprising:
identifying (202) a SQL query;
identifying (204) one or more source tables against which the SQL query will be processed and a classification of each source table;
generating (206) a parse tree based on the SQL query, the parse tree comprising the one or more source tables, an output table, and at least one operation;
searching (210) the parse tree for operations to re-write by:
selecting a current branch to search;
performing, as an analyzed operation, an analysis of each operation in the current branch starting at the output table and for each operation:
determining (212) whether the analyzed operation is an aggregation process that transforms a user-level detailed table (ULDT) into an aggregate table;
in response to the operation being an aggregation process that transforms a user-level detailed table (ULDT) into an aggregate table: re-writing (214) the operation with a differential privacy (DP) operation;
in response to the operation not being an aggregation process that transforms a ULDT into an aggregate table: proceeding (220) to the next operation in the current branch;
selecting (216) a next branch as the current branch; and
repeating the analysis until each branch of the parse tree has been searched.

2. The method (200) of claim 1, wherein the classification of each source table indicates whether each source table is a ULDT or an aggregate table.

3. The method (200) of claim 1, wherein the parse tree comprises at least one intermediate table, wherein an intermediate table is a result of an operation that is not the output table.

4. The method (200) of claim 1, comprising generating (208) a tag for each table in the parse tree according to a set of tagging rules.

5. The method (200) of claim 4, wherein the set of tagging rules comprise:
for each source table classified as a ULDT, set the tag equal to zero;
for each source table classified as an aggregate table, set the tag equal to one;
for each intermediate or output table that is a result of a JOIN or UNION operation, set the tag equal to a minimum tag value of input tables used in the JOIN or UNION operation;
for each intermediate or output table that is a result of an aggregation operation that does not group by identity fields, set the tag equal to the tag value of an input table incremented by two; and
for each intermediate or output table that is not a result of an aggregation operation that does not group by identity fields, set the tag equal to the input tag.

6. The method (200) of claim 5, wherein determining whether the analyzed operation is an aggregation process that transforms a ULDT into an aggregate table comprises:
determining whether the analyzed operation receives an input table with a tag value of zero and produces an output or intermediate table with a tag value of two.

7. The method (200) of claim 1, wherein generating the parse tree based on the SQL query comprises:
sending the SQL query to a query engine with instructions to parse the SQL query and return the parse tree without executing the SQL query.

8. One or more computer-readable storage medium (720, 730) storing one or more instructions that, when executable by one or more computers, cause the one or more computers to perform operations comprising:
identifying (202) a SQL query;
identifying (204) one or more source tables against which the SQL query will be processed and a classification of each source table;
generating (206) a parse tree based on the SQL query, the parse tree comprising the one or more source tables, an output table, and at least one operation;
searching (210) the parse tree for operations to re-write by:
selecting a current branch to search;
performing, as an analyzed operation, an analysis of each operation in the current branch starting at the output table and for each operation:
determining (212) whether the analyzed operation is an aggregation process that transforms a user-level detailed table (ULDT) into an aggregate table;
in response to the operation being an aggregation process that transforms a user-level detailed table (ULDT) into an aggregate table: re-writing (214) the operation with a differential privacy (DP) operation;
in response to the operation not being an aggregation process that transforms a ULDT into an aggregate table: proceeding (220) to the next operation in the current branch;
selecting (216) a next branch as the current branch; and
repeating the analysis until each branch of the parse tree has been searched.

9. The medium (720, 730) of claim 8, wherein the classification of each source table indicates whether each source table is a ULDT or an aggregate table.

10. The medium (720, 730) of claim 8, wherein the parse tree comprises at least one intermediate table, wherein an intermediate table is a result of an operation that is not the output table.

11. The medium (720, 730) of claim 8, the operations comprising generating a tag for each table in the parse tree according to a set of tagging rules.

12. The medium (720, 730) of claim 11, wherein the set of tagging rules comprise:
for each source table classified as a ULDT, set the tag equal to zero;
for each source table classified as an aggregate table, set the tag equal to one;
for each intermediate or output table that is a result of a JOIN or UNION operation, set the tag equal to a minimum tag value of input tables used in the JOIN or UNION operation;
for each intermediate or output table that is a result of an aggregation operation that does not group by identity fields, set the tag equal to the tag value of an input table incremented by two; and
for each intermediate or output table that is not a result of an aggregation operation that does not group by identity fields, set the tag equal to the input tag.

13. The medium (720, 730) of claim 12, wherein determining whether the analyzed operation is an aggregation process that transforms a user-level detailed table (ULDT) into an aggregate table comprises:
determining whether the analyzed operation receives an input table with a tag value of zero and produces an output or intermediate table with a tag value of two.

14. The medium (720, 730) of claim 8, wherein generating the parse tree based on the SQL query comprises:
sending the SQL query to a query engine with instructions to parse the SQL query and return the parse tree without executing the SQL query.

15. A computer-implemented system (100, 700), comprising:
one or more computers; and
one or more computer memory devices interoperably coupled with the one or more computers and having computer-readable storage media storing one or more instructions that, when executed by the one or more computers, perform the method of any of claims 1-7.
